# EUROPÄISCHE PATENTANMELDUNG

(11) **EP 1 775 810 A1**
(43) Veröffentlichungstag der Anmeldung: **18.04.2007**
(21) Anmeldenummer: 06013993.8
(22) Anmeldetag: 06.07.2006
(51) Int. Cl.: H02B 1/32

(54) **Schaltschrank mit einer Montageplatte**

(30) Priorität: 12.10.2005 DE 102005048831
(71) Anmelder: Rittal GmbH & Co. KG, 35745 Herborn (DE)
(72) Erfinder: Benner, Rolf, 35745 Herborn-Amdorf (DE); Müller, Matthias, 35683 Dillenburg (DE); Elm, Oskar, 35713 Eschenburg (DE)
(74) Vertreter: Fleck, Hermann-Joseph

(57) **Zusammenfassung**

Die Erfindung betrifft einen Schaltschrank mit einem Rahmengestell und/oder Verkleidungselementen, wobei in den Innenraum des Schaltschrankes eine Montageplatte einbringbar ist, wobei die Unterkante der Montageplatte mit Gleitstücken versehen ist, wobei ein oder mehrere Abstandselemente an einem rückwärtigen Verkleidungsteil oder an rückwärtigen Teilen des Rahmengestelles befestigt sind, an denen die Montageplatte in der Montageposition abgestützt ist, und wobei die Montageplatte im Bereich der Unterkante und der Oberkante Fixieraufnahmen bildet, die in der Einbaustellung der Montageplatte mit Fixierelementen von unteren und/oder oberen Anlageelementen zusammenarbeiten und die Montageplatte unverstellbar festlegen.

Mit Gleitstücken, die sich auf der Boden- bzw. Deckplatte abstützen und Fixierungselementen an den Abstandselementen und Fixieraufnahmen an der Montageplatte wird der Einbau ohne Gleitschienen ermöglicht, wobei der Schaltschrank mit der Bodenplatte oder der Deckplatte der Standfläche zugekehrt aufgestellt werden kann.

## Beschreibung

Die Erfindung betrifft einen Schaltschrank mit einem Rahmengestell und/oder Verkleidungselementen, wobei in den Innenraum des Schaltschrankes eine Montageplatte einbringbar ist, wobei die Unterkante der Montageplatte mit Gleitstücken versehen ist, wobei ein oder mehrere Abstandselemente an einem rückwärtigen Verkleidungsteil und/oder an rückwärtigen Teilen des Rahmengestelles befestigt sind, an denen die Montageplatte in der Montageposition abgestützt ist, und wobei die Montageplatte im Bereich der Unterkante und der Oberkante Fixieraufnahmen bildet, die in der Einbaustellung der Montageplatte mit Fixierelementen von unteren und oberen Anlageelementen zusammenarbeiten und die Montageplatte unverstellbar festlegen.

Derartige Schaltschränke können mit oder ohne Rahmengestell ausgebildet sein, wobei durch die Verkleidungselemente stets ein Schaltschrankinnenraum umschlossen ist, in den die Montageplatte mit den Aufbauten eingebaut wird. Dabei ist aus Sicherheitsgründen stets ein Abstand zur parallelen Rückwand eingehalten, der durch die Abstandselemente vorgegeben ist. Die bestückten Montageplatten können dabei ein erhebliches Gewicht aufweisen und sind daher schwer zu handhaben, was den Einbau und den Zugang bei Ergänzungs- und/oder Reparaturarbeiten betrifft. Es hat daher auch nicht an Versuchen gefehlt, den Einbau und Zugang zur Montageplatte zu vereinfachen.

Wie die DE 1 465 775 zeigt, sind im Bereich der Unterkante der Rückwand schon Lagerelemente angebracht worden, in die die Montageplatte eingesetzt und schwenkbar gelagert werden konnte. Im Bereich der Oberkante der Montageplatte ist die Montageplatte zusätzlich mittels lösbaren Verbindungen an Abstandselementen festgehalten. Bei dieser Ausgestaltung wird der Einbau schwerer Montageplatten nicht erleichtert. Im Falle einer Ergänzung oder Reparatur kann nach dem Lösen der oberen Verbindungen die Montageplatte in eine Schrägstellung gebracht werden, in der die Rückseite derselben zugänglich ist.

Man hat den Einbau der Montageplatte in den Schaltschrankinnenraum dadurch schon erleichtert, dass die Unterkante derselben mit Gleitstücken versehen wird, die auf Führungsschienen auf dem Boden des Schaltschrankes verstellbar geführt sind, wie die FR 2 681 478 B1 zeigt. Dabei sind im Bereich der Unterkante und der Oberkante die Montageplatte Abstandselemente mit Rastmitteln vorgesehen, die in der Einbaustellung der Montageplatte festhalten und sichern. Diese Ausgestaltung erfordert in jedem Falle zumindest zwei Führungsschienen, die auf der Bodenplatte oder dem zugekehrten Bereich des Rahmengestelles befestigt werden müssen.

Es ist Aufgabe der Erfindung einen Schaltschrank der eingangs erwähnten Art so zu gestalten, dass schwere Montageplatten mit geringem technischem Aufwand in den Schaltschrankinnenraum eingebaut werden können, wobei als zusätzlicher Vorteil hinzukommen soll, dass der Schaltschrank dabei wahlweise mit der Bodenplatte oder der Deckplatte der Standfläche zugekehrt aufgestellt werden kann.

Diese Aufgabe wird nach der Erfindung dadurch gelöst, dass die Gleitstücke sich mit einer Gleitfläche beim Einbringen der Montageplatte in den Schaltschrankinnenraum auf einer dem Schaltschrankinnenraum zugekehrten Innenfläche einer Bodenplatte und Deckplatte des Schaltschrankes abstützen und führen, wobei die Bodenplatte oder Deckplatte der Standfläche des Schaltschrankes zugekehrt ist.

Die Anordnung von Fixieraufnahmen an der Unterkante und der Oberkante sowie die Verwendung von Abstandselementen mit Fixierelementen im zugekehrten unteren oder oberen Bereich der Rückwand lässt die beiden Aufstellungsvarianten für den Schaltschrank zu. Diese Fixierung bringt eine eindeutige Einbaustellung mit der in Richtung zu den Seitenwänden unverschiebbaren Festlegung. Die Gleitstücke auf der Unterkante der Montageplatte und deren Führung auf der Bodenplatte oder der Deckplatte machen Führungsschienen überflüssig. Die Festlegung der Unterkante an den zugekehrten Abstandselementen übernehmen die Aufnahmenuten der Abstandselemente, die die Unverschiebbarkeit der Montageplatte senkrecht zur Rückwand sicherstellen. Zudem kann die Montageplatte in der Einbaustellung mit Mitteln endgültig festgelegt werden, die in bekannter Weise ausgebildet sein können oder was auch unter entsprechender Auslegung der Fixierelemente erreicht werden kann.

Damit beim Einbau der Montageplatte die Gleitstücke, die seitliche Fixierung der Montageplatte über die Fixieraufnahmen und die Fixierelemente nicht beeinträchtigen, ist nach einer Ausgestaltung vorgesehen, dass die Gleitstücke außerhalb der Fixieraufnahmen der Unterkante auf die Montageplatte aufgesteckt sind und dass die Gleitstücke nach Erreichen der Einbaustellung von der Unterkante der Montageplatte abnehmbar sind.

Dabei kann nach einer Ausgestaltung vorgesehen sein, dass die Fixieraufnahmen der Unterkante und der Oberkante als vertikale Ausnehmungen der Montageplatte ausgebildet sind, die in der horizontalen Richtung auf die Abmessung der als Fixierelemente der Abstandselemente ausgebildeten Bolzen abgestimmt sind sowie dass die Fixierelemente der Abstandselemente als Schraubbolzen ausgebildet sind, auf die Schraubelemente zum Festlegen der in Einbaustellung befindlichen Montageplatte aufschraubbar sind.

Das Einführen der Unterkante der Montageplatte in die Aufnahmenuten der Abstandselemente wird nach einer Ausführung dadurch erreicht, dass die Gleitstücke die Unterkante der Montageplatte in einem Abstand zur Bodenplatte oder Deckplatte führen, so dass nach dem Anlegen der Montageplatte an die unteren oder oberen Abstandselemente die Unterkante über den Aufnahmenuten der zugekehrten Abstandselemente liegt und dass nach dem Abnehmen der Gleitstücke sich die Montageplatte absenkt und mit der Unterkante in die Aufnahmenuten der zugekehrten Abstandselemente eingeführt wird. Dabei kann das Abnehmen der Gleitstücke dadurch erleichtert werden, dass die Gleitstücke beim Abnehmen auf der Unterkante der Montageplatte in seitlich angeordnete vergrößerte Ausnehmungen der Unterkante verschiebbar sind, die den Eingriff der Unterkante in dem Gleitstück freigeben.

Bei der Zuordnung der Deckplatte des Schaltschrankes zur Standfläche kann der Einbau der Montageplatte dadurch erleichtert werden, dass die oberen Abstandselemente im Bereich der Deckplatte mit Auflaufschrägen versehen sind, die beim Einführen der Oberkante der Montageplatte in die untere Abstandselemente im Bereich der Bodenplatte die Montageplatte in die Einbaustellung anheben und dass mit dem Einführen der Fixierelemente der Abstandelemente im Bereich der Deckplatte in die Fixieraufnahmen der Unterkante der Montageplatte die vertikale Einbaustellung der Montageplatte festgehalten und die Abnahme der Gleitstücke freigegeben ist. Ist die Montageplatte mit den Gleitstücken auf der Bodenplatte mit einer Kabeleinführung abgestützt, dann ist vorgesehen, dass bei einer Bodenplatte mit Kabeleinführung und hoch gekanteten L-förmigen Rand die Gleitstücke auf der Unterkante der Montageplatte auf dem Rand gleiten und zusätzlich mit einem Ansatz in die Kabeleinführung eingreifen und seitlich am Rand geführt sind.

Die Erfindung wird anhand der Zeichnungen an einem Ausführungsbeispiel näher erläutert. Es zeigen:
- Fig. 1: in perspektivischer Vorderansicht einen Schaltschrank, in den eine Montage eingebaut wird, wobei die Bodenplatte mit Kabeleinführung versehen und der Standfläche zugekehrt ist,
- Fig. 2: eine perspektivische Teilansicht der Montageplatte mit Fixieraufnahme der Unterkante und aufsteckbarem Gleitstück,
- Fig. 3: eine der Fig. 2 entsprechenden Teilansicht mit anderem Gleitstück und anderer Anbringung an der Unterkante der Montageplatte und
- Fig. 4: in perspektivischer Vorderansicht den Schaltschrank nach Fig. 1, wobei die Deckplatte der Standfläche zugekehrt ist und die Montageplatte bei der Einführung in den Schaltschrankinnenraum gezeigt ist.

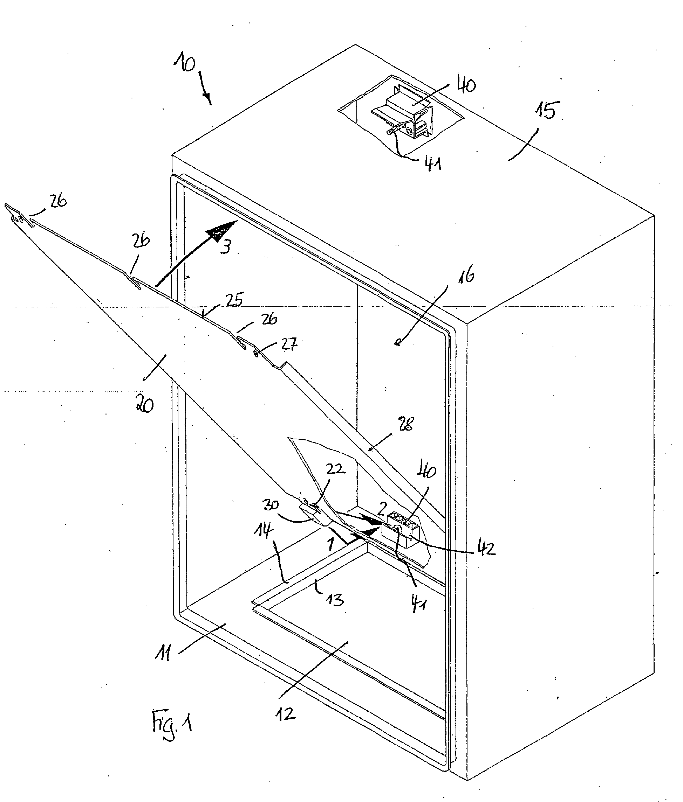

Der in Figur 1 dargestellte Schaltschrank 10 ist rahmengestelllos aufgebaut. Die Bodenplatte 11, die Deckplatte 15, die Rückwand 16 und die Seitenwände 17 und 18 umschließen den Schaltschrankinnenraum, in den die Montageplatte 20 im Abstand zur Rückwand 16 eingebaut wird. Die Bodenplatte 11 weist eine Kabeleinführung 12 auf, an der ein L-förmiger Rand mit den Randabschnitten 13 und 14 abgekantet ist. Der L-förmige Rand ist dem Innenraum des Schaltschrankes 10 zugekehrt. Im Bereich der offenen Vorderseite ist eine nicht dargestellte Schranktür angebracht.

Im unteren und oberen Bereich der Rückwand 16 sind Abstandselemente 40 angebracht, die einen Anschlag beim Einbau der Montageplatte 20 bilden und damit den Abstand zur Rückwand 16 bestimmen.

Die Montageplatte 20 weist an der Unterkante 21 und der Oberkante 25 Fixieraufnahmen 22 und 26 auf, die als Ausnehmungen ausgebildet sind.

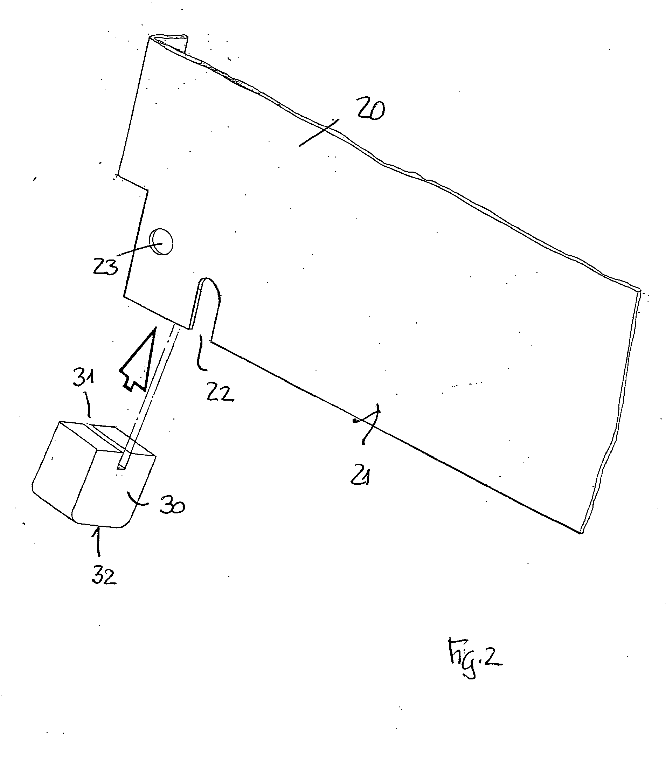

Die Abstandselemente 40 weisen Fixierelemente 41 in Form von Vorsprüngen auf (oben Bolzen, unten Ansätze), die als Schraubbolzen ausgebildet sein können. Die Fixieraufnahmen 22 und 26 haben eine horizontale Breite, die dem Durchmesser der Fixierelemente 41 entspricht. Wie die Figur 2 zeigt, werden auf die Unterkante 21 der Montageplatte 20 Gleitstücke 30 aufgesteckt, wobei die Unterkante 21 in die Querschlitze 31 der Gleitstücke 30 eingeführt ist. Die Gleitstücke 30 tragen dem Randabschnitt 14 der Bodenplatte 12 zugekehrt Gleitflächen 32, auf denen die Montageplatte 20 abgestützt in Richtung der Rückwand 16 in den Schaltschrankinnenraum eingeschoben wird, wie mit der Bezugsziffer "1" in Figur 1 angedeutet ist. Dabei wird das Fixierelement 41 der beiden unteren Abstandselemente 40 in die Fixieraufnahmen 22 der Montageplatte 20 eingeführt, wie das Bezugszeichen "2" in Figur 2 anzeigt.

Dabei sind vorzugsweise zwei Gleitstücke 30 und zwei Abstandselemente 40 mit Fixierelementen 41 vorgesehen. Es können jedoch auch mehr als zwei Fixierstellen vorgesehen sein, wie die Fixieraufnahmen 26 an der Oberkante 25 der Montageplatte 20 andeuten. Die Montageplatte 20 kann zusätzliche Befestigungsaufnahmen 23 und 27 tragen. Außerdem können die vertikalen Seiten der Montageplatte 20 durch Abkantungen 28 versteift sein.

Hat die Unterkante 21 der Montageplatte 20 die Anschlagstellung an den unteren Abstandselementen 40 erreicht, dann wird sie gegen die oberen Abstandselemente 40 verschwenkt, wie die Bezugsziffer "3" in Figur 1 zu erkennen gibt. Die als Schraubbolzen ausgebildeten Fixierelemente 41 der oberen Abstandselemente 40 greifen in die Fixieraufnahmen 26 ein.

Beim Aufrichten der Montageplatte 20 greift die Unterkante 21 in die Aufnahmenuten 42 der unteren Abstandselemente 40 ein. Dabei wird die Montageplatte 20 unterstützt durch die wirkenden Hebelkräfte, entgegen der Schwerkraftrichtung angehoben und die Gleitstücke 30 von der Bodenplatte 12 abgehoben.

Die Gleitstücke 30 können dann von der Unterkante 21 abgenommen werden. Sind die Fixierelemente 41 der Abstandselemente 40 als Schraubbolzen ausgebildet, dann kann die Einbaustellung mittels aufschraubbarer Schraubelemente festgelegt werden.

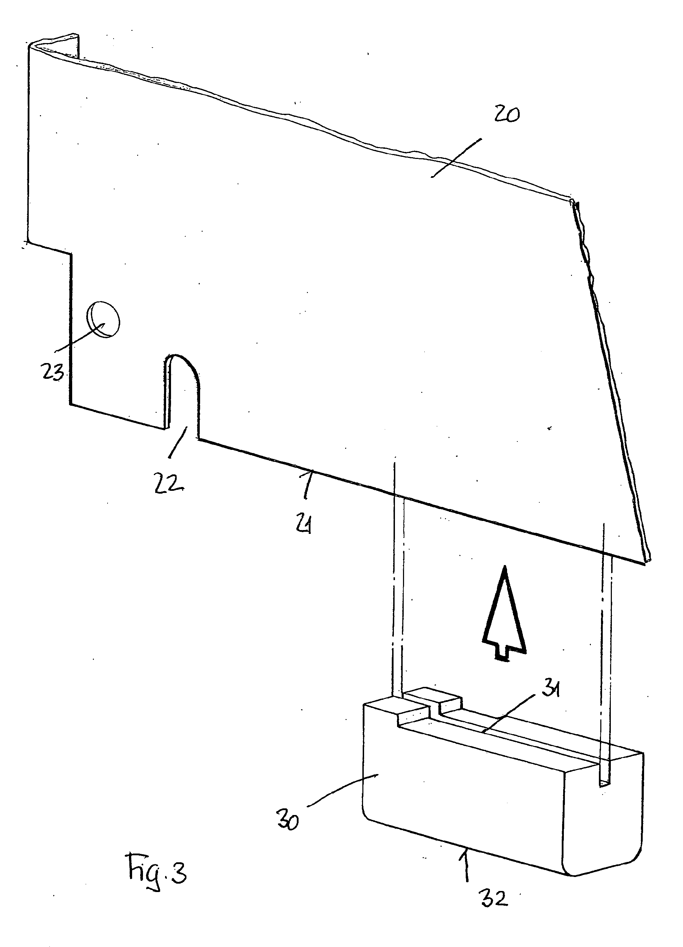

Wie die Figur 3 zeigt, kann die Unterkante 21 der Montageplatte 20 auch nur ein mittiges, breites Gleitstück 30 tragen, wenn eine geschlossene Bodenplatte 11 die Abstützung für die Gleitfläche 32 bildet.

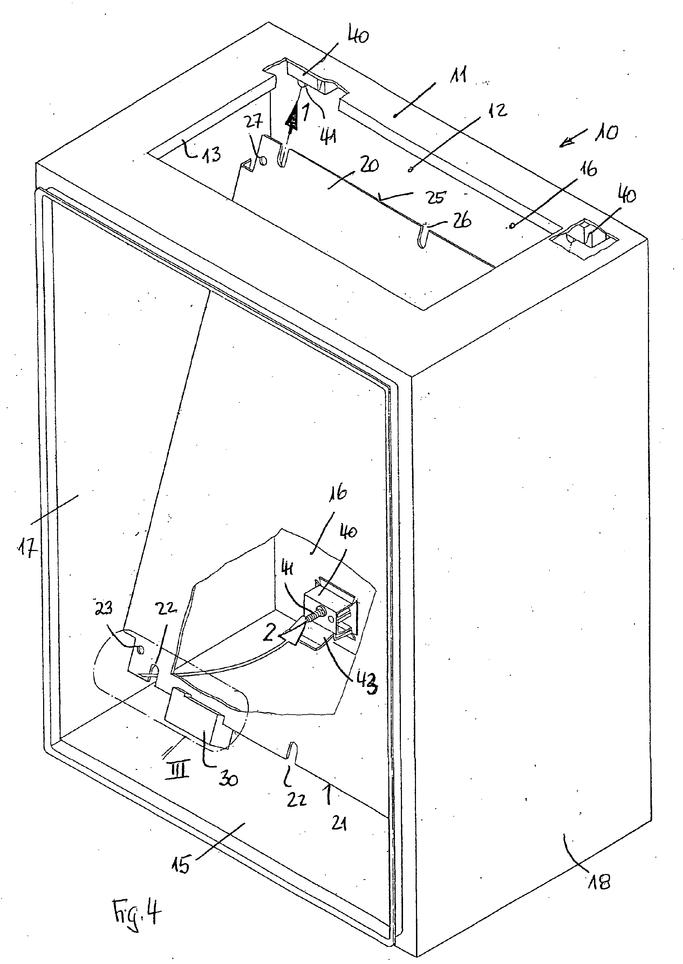

Zudem können die Abstandselemente 40 auch Auflaufträger 43 aufweisen, die beim Einführen der Oberkante 26 in die Aufnahmenuten 42 der Abstandselemente 40 im Bereich der Bodenplatte 11 die endgültige Einbaustellung bestimmen, wie in Figur 4 gezeigt ist, bei der die Deckplatte 15 des Schaltschrankes 10 der Standfläche zugekehrt ist.

Der Einbauvorgang läuft dabei in drei Schritten ab, von denen in Figur 4 mit dem Bezugszeichen "1" der 1. Schritt angedeutet ist. Die Fixierung in Seitenrichtung übernehmen wieder die Fixieraufnahmen 26 und 22 sowie die Fixierelemente 41 der Abstandselemente 40. Das Gleitstück 30 stützt sich auf der Deckplatte 15 ab und die Unterkante 21 der Montageplatte 20 wird beim Auflaufen auf die Auflaufschräge 43 so weit angehoben, dass das Gleitstück 30 abgenommen werden kann. Die in die Fixieraufnahmen 22 eingreifenden Fixierelemente 41 der Abstandselemente 40 im Bereich der Deckplatte 15 halten die Einbaustellung und damit die Einführung der Oberkante 26 der Montageplatte 20 in den Aufnahmenuten 42 der Abstandselemente 40 im Bereich der Bodenplatte 11 fest, die für die Einführung der Kabel von oben mit der Kabeleinführung 12 versehen ist.

Es muss noch darauf hingewiesen werden, dass mit den auf die Unterkante 21 der Montageplatte 20 aufgesteckten Gleitstücken 30 der Abstand der Unterkante 21 von der Bodenplatte 11 oder der Deckplatte 15 bestimmt wird, so dass diese über den Aufnahmenuten 42 der Abstandselemente 40 liegt und nach dem Abnehmen der Gleitstücke 30 das Einführen der Unterkante 21 in die Aufnahmenuten 42 der Abstandselemente 40 erleichtert.

## Patentansprüche

1. Schaltschrank mit einem Rahmengestell und/oder Verkleidungselementen, wobei in den Innenraum des Schaltschrankes eine Montageplatte einbringbar ist, wobei die Unterkante der Montageplatte mit Gleitstücken versehen ist, wobei ein oder mehrere Abstandselemente an einem rückwärtigen Verkleidungsteil oder an rückwärtigen Teilen des Rahmengestelles befestigt sind, an denen die Montageplatte in der Montageposition abgestützt ist, und wobei die Montageplatte im Bereich der Unterkante und der Oberkante Fixieraufnahmen bildet, die in der Einbaustellung der Montageplatte mit Fixierelementen von unteren oder oberen Anlageelementen zusammenarbeiten und die Montageplatte unverstellbar festlegen,
**dadurch gekennzeichnet,**
**dass** die Gleitstücke (30) sich mit einer Gleitfläche (31) beim Einbringen der Montageplatte (20) in den Schaltschrankinnenraum auf einer dem Schaltschrankinnenraum zugekehrten Innenfläche einer Bodenplatte (11) und/oder Deckplatte (15) des Schaltschrankes abstützen und führen.

2. Schaltschrank nach Anspruch 1,
**dadurch gekennzeichnet,**
**dass** die Abstandselemente (40) mit einer parallel zur Rückwand (16) verlaufenden Aufnahmenut (42) versehen sind, die die Unterkante (21) bzw. Oberkante (25) der Montageplatte (20) in der Einbaustellung aufnehmen und senkrecht zur Montageplattenebene unverschiebbar festhalten und
**dass** Mittel vorgesehen sind, die die Montageplatte (20) mit der Oberkante (25) bzw. der Unterkante (21) an den zugekehrten Abstandselemente (40) festlegen.

3. Schaltschrank nach Anspruch 1 oder 2,
**dadurch gekennzeichnet,**
**dass** die Gleitstücke (30) außerhalb der Fixieraufnahmen (22) der Unterkante (21) auf die Montageplatte (20) aufgesteckt sind und
**dass** die Gleitstücke (30) nach Erreichen der Montageposition von der Unterkante (21) der Montageplatte (20) abnehmbar sind.

4. Schaltschrank nach einem der Ansprüche 1 bis 3,
**dadurch gekennzeichnet,**
**dass** die Fixieraufnahmen (22,26) der Unterkante (21) und der Oberkante (25) als Ausnehmungen der Montageplatte (20) ausgebildet sind, die auf die Abmessung der als Vorsprünge ausgebildeten Fixierelemente (41) der Abstandselemente (40) abgestimmt sind.

5. Schaltschrank nach Anspruch 4,
**dadurch gekennzeichnet,**
**dass** die Abstandselemente (40) Schraubbolzen aufweisen, auf die Schraubelemente zum Festlegen der in Einbaustellung befindlichen Montageplatte (20) aufschraubbar sind.

6. Schaltschrank nach einem der Ansprüche 1 bis 5,
**dadurch gekennzeichnet,**
**dass** die Gleitstücke (30) die Unterkante (21) der Montageplatte (20) in einem Abstand zur Bodenplatte (11) führen, so dass nach dem Anlegen der Montageplatte (20) an die unteren Abstandselemente (40) die Unterkante (21) über den Aufnahmenuten (42) der zugekehrten Abstandselemente (40) liegt und
**dass** nach dem Abnehmen der Gleitstücke (30) sich die Montageplatte (20) absenkt und mit der Unterkante (21) in die Aufnahmenuten (42) der zugekehrten Abstandselemente (30) eingeführt wird.

7. Schaltschrank nach Anspruch 6,
**dadurch gekennzeichnet,**
**dass** die Gleitstücke (30) beim Abnehmen auf der Unterkante (21) der Montageplatte (20) in seitlich angeordnete vergrößerte Ausnehmungen der Unterkante (21) verschiebbar sind, die den Eingriff der Unterkante (21) in dem Gleitstück (30) freigeben.

8. Schaltschrank nach einem der Ansprüche 1 bis 7,
**dadurch gekennzeichnet,**
**dass** die oberen Abstandselemente (40) im Bereich der Deckplatte (15) mit Auflaufschrägen (43) versehen sind, die beim Einführen der Oberkante (25) der Montageplatte (20) in die untere Abstandselemente (40) im Bereich der Bodenplatte (11) die Montageplatte (20) in die Einbaustellung anheben und
**dass** mit dem Einführen der Fixierelemente (41) der Abstandelemente (40) im Bereich der Deckplatte (15) in die Fixieraufnahmen (22) der Unterkante (21) der Montageplatte (20) die vertikale Einbaustellung der Montageplatte (20) festgehalten und die Abnahme der Gleitstücke (20) freigegeben ist (Figur 4).

9. Schaltschrank nach einem der Ansprüche 1 bis 7,
**dadurch gekennzeichnet,**
**dass** bei einer Bodenplatte (11) mit Kabeleinführung (12) und hoch gekanteten L-förmigen Rand (13,14) die Gleitstücke (30) auf der Unterkante (21) der Montageplatte (20) auf dem Rand (14) gleiten und zusätzlich mit einem Ansatz in die Kabeleinführung (12) eingreifen und seitlich am Rand (13) geführt sind.
